(19)

Europäisches Patentamt

European Patent Office

Office européen des brevets

(11) **EP 4 181 377 A1**

(12) **EUROPEAN PATENT APPLICATION**

(43) Date of publication:
**17.05.2023  Bulletin 2023/20**

(21) Application number: **21383027.6**

(22) Date of filing: **12.11.2021**

(51) International Patent Classification (IPC):
**H02M 3/158** (2006.01)

(52) Cooperative Patent Classification (CPC):
**H02M 3/1586; H02J 2300/24**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Soltec Innovations, S.L.
30500 Molina de Segura (ES)**

(72) Inventors:
- **Gracia Inglés, José Ángel
  30710 Los Alcázares (ES)**
- **Villarejo Mañas, Jose Antonio
  30203 Cartagena (ES)**

(54) **POWER SUPPLY AND BATTERY CHARGING ARRANGEMENT FOR FEEDING A SOLAR TRACKER AND METHOD THEREOF**

(57)    The object of the invention provides a power supply and battery arrangement for feeding a solar tracker. In first aspect of the invention an encompassing a main electronic board, capable of operating autonomously as a charger up to a maximum input current, and auxiliary electronic boards, hereinafter modules, which are connected to the main electronic board to expand the range of current input is provided. Several of these modules, auxiliary electronic boards, may be arranged at the same time to increase the input current. In a second aspect of the invention a method for feeding a solar tracker using control loops is provided.

FIGURE 1

**Description**

**OBJECT OF THE INVENTION**

The invention hereby provided belongs to the field of conversion of solar energy into electrical power by means of photovoltaic technologies.
More precisely, the object of the invention is directed to a high series power supply.

**BACKGROUND**

Power supply and charge of auxiliary circuits through connection to the string in solar fields.
Expandable current input range by using modules that connect to the master board. The main advantage is being able to use a modular design to be able to adapt to different levels of string current. This modularity allows that the electronics are not oversized (the price is reduced) in cases where the string current is low and that its range is expandable in cases where the string current is high, always adapting the electronics to the specific case of string current in a simple way and saving costs.
On the other hand, this configuration allows working with extremely high inrush currents, difficult to tackle with a single stage.
In previous developments (single stage), the control of the output voltage was carried out by directly adjusting the duty cycle, considering that the input was a current source and that with an appropriate filtering, the ripple and oscillations of the input voltage could be eliminated. that the photovoltaic system "saw". There was no input voltage control loop. However, when approaching a "multistage" design, a stable input voltage is necessary to ensure a good current distribution between the different stages.

**DESCRIPTION**

The object of the invention provides a battery charger with serial connection to the string (from where it obtains the energy to charge) to power the solar tracker or any auxiliary electronics in solar fields; being the object of the invention defined by the content of the claims.
The object of invention encompasses a main electronic board, capable of operating autonomously as a charger up to a maximum input current, and auxiliary electronic boards, hereinafter modules, which are connected to the main electronic board to expand the range of current input.
Several of these modules, auxiliary electronic boards, may be arranged at the same time to increase the input current. Each module allows the input current to be increased by a certain number of amps that, added to those already allowed by the main electronic board, define the current input range of the equipment. The main electronic board sets a current reference for the rest of the modules, auxiliary electronic boards, that is equal to the maximum input current between the number of modules, auxiliary electronic boards. In this way, the input current will be distributed evenly among all the auxiliary electronic boards.

**DRAWINGS**

To complement the description being made and in order to aid towards a better understanding of the characteristics of the invention, in accordance with a preferred example of practical embodiment thereof, a set of drawings is attached as an integral part of said description wherein, with illustrative and non-limiting character, the following has been represented:

Figure 1: Shows an electric diagram of the object of the invention.

Figure 2: Shows an electric diagram of the main electronic board.

Figure 3: Shows an electric diagram of the auxiliary electronic board.

**DETAILED DESCRIPTION**

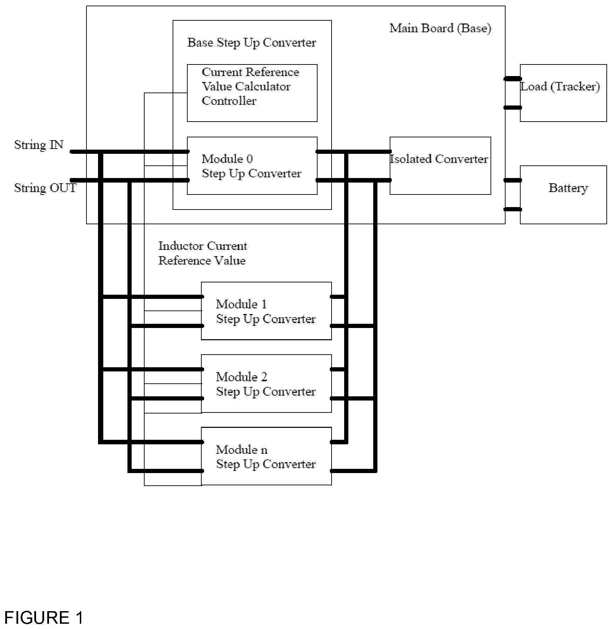

In a preferred embodiment of a first aspect of the object of the invention, it is provided power supply and battery charging arrangement for feeding a solar tracker through connection to the string in solar fields as shown in figure 1.
Said power supply and battery charging arrangement for feeding the solar tracker comprises a main electronic board, shown in figure 1, capable of operating autonomously as a charger up to a maximum input current, said main electronic board being connected to:

> i. a load of the solar tracker to feed the solar tracker,
> ii. a battery to feed the battery and
> iii. a plurality of auxiliary electronic boards connected to the main electronic board, to expand the range of current input and comprising:

>> i. an isolated converter, and
>> ii. a step-up converter comprising in turn:

>>> • a main electronic board PV+ input,
>>> • a main electronic board PV- input connected to a first ground connector of the main electronic board,
>>> • a Vin measurement circuit connected to the main electronic board PV+ input,
>>>   ◦ and the main electronic board PV- input
>>> • a first main electronic board controller connected to the Vin measurement circuit receiving the measured Vin,
>>> • a GAIN connected to the first controller associated to a main electronic board inductor current reference value,
>>> • a second main electronic board controller receiving the reference value from the GAIN and connected to the main electronic board inductor current measurement circuit configured to receive current measurements and to produce a main electronic board output control,
>>> • a main electronic board switch driver PWM controller configured to receive the output control from the main electronic board second controller,
>>> • a main electronic board low side switch connected to the main electronic board switch driver PWM controller and to a main electronic board second ground connector and a main electronic board Vout -,
>>> • a main electronic board high side switch connected to the main electronic board switch driver PWM controller connected to a main electronic board Vout+,
>>> • a main electronic board Vout measurement circuit arranged between the high side switch and the main electronic board Vout- to measure Vout, and
>>> • a main electronic board third controller connected to the main electronic board Vout measurement circuit and configured to generate a reference Vin value from a Vout reference value and sending said Vin value to the main electronic board first controller.

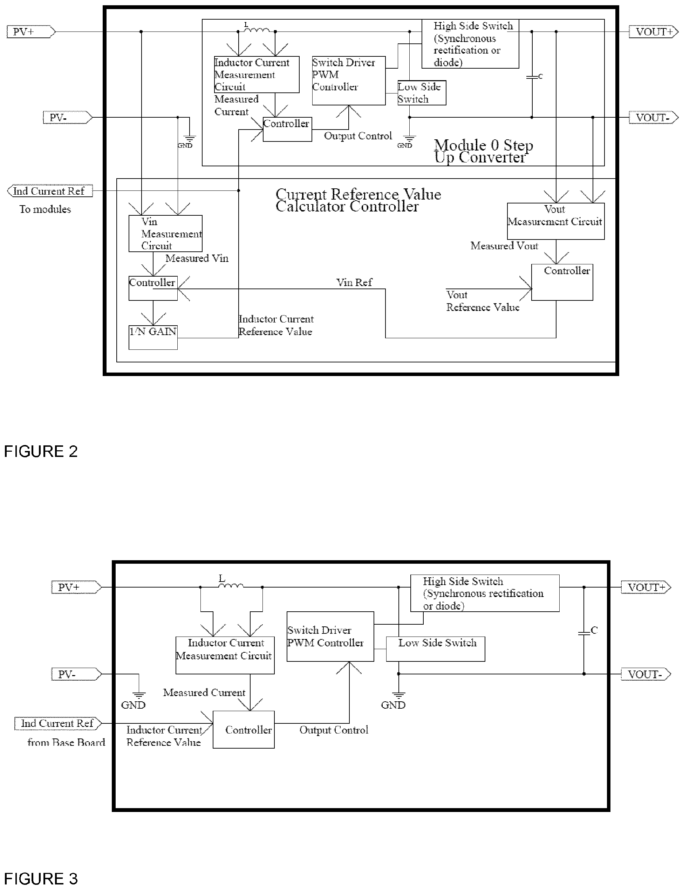

A plurality of auxiliary electronic boards as the one depicted in figure 2 are connected to the main electronic board, being said plurality of auxiliary electronic boards connected to the main electronic board to expand the range of current input based on a current reference value generated by the main electronic board. Each auxiliary electronic board comprises:

• an auxiliary electronic board PV+ input,
• an auxiliary electronic board PV- input connected to a first ground connector of the auxiliary electronic board,
• an auxiliary electronic board inductor current measurement unit connected to the auxiliary electronic board PV+ input,
• an auxiliary electronic board controller connected to the auxiliary electronic board inductor current measurement unit to receive measured current and generate an auxiliary electronic board output control,
• an auxiliary electronic board switch drive PWM controller configure to receive the auxiliary electronic board output control from the auxiliary electronic board controller, connected to:

> i. an auxiliary electronic board low side switch connected to a second auxiliary electronic board ground connector and auxiliary electronic board Vout -, and
> ii. an auxiliary electronic board high side switch connected to an auxiliary electronic board Vout+, and

• a capacitor connected between the connections of:

> ◦ the auxiliary electronic board low side switch connected to the second auxiliary electronic board ground connector and auxiliary electronic board Vout -, and
> ◦ the auxiliary electronic board high side switch connected to an auxiliary electronic board Vout+,

The different auxiliary electronic boards can work in "interleaving" (out of phase with each other, intertwined) so that the ripple of the current in the input capacitor is appreciably reduced. This increases the life of the capacitor and the quality of the voltage that the rest of the installation sees.

The main electronic board and or the auxiliary electronic board high side switch may be a synchronous rectification or diode.

The object of the invention may comprise two DC/DC converters.

- A step-up converter (Module 0 in figure 1) which is a step-up converter (boost or step-up converter) configured to "steal" a small portion of energy from the string to which it is connected in series, that is, the current that flows through the string passes through this converter through the String IN and String OUT terminals. This converter transforms the input current (that of the string) and the input voltage that the string itself generates (according to the power its "steals", the more power the more voltage) into a fixed output voltage (17-18v) and 2 amps of output current (maximum, the more output current, the more input voltage it generates). The output of this converter is in turn the input of the isolated converter.

- An isolated converter (Isolated Converter in figure 1) is responsible for adapting the output of the step-up converter (18 volts and current <= 2 amps) to the appropriate values of voltage and current to charge the battery (28v and current <= 1 amp). In addition, this Isolated converter provides electrical isolation between the high voltage area (the string) and the low voltage area (the tracker controller and the battery) to provide operator safety.

The object of the invention may comprise auxiliary electronics configured to calculate based on the output reference voltage (the voltage that we want to set at the output of the boost converter, that is, 18v) a reference input voltage (that is, it calculates based on the output voltage desired input voltage (voltage drop in the string) that the object of the invention should generate.

As per figure 3, the object of the fist aspect of the invention embraces:

- Output voltage controller connected to the output voltage measurement circuit. Its function is to calculate the input voltage that must be at the input of the object of the invention based on the reference output voltage (set by us at 18v).

- Input voltage controller connected to the input measurement circuit. Its function is to control the input voltage of the object of the invention, that is, to try that the input voltage of the object of the invention is equal to the reference input voltage that the output voltage controller calculates.

- Gain block. Calculates the reference input current of the modules based on the input voltage and the number of modules that are connected.

- Input current controller connected to the PWM controller. Its function is to control the input current of the module (and therefore of the object of the invention in total if more modules are connected, each module controls its input current), that is, to try that the input current of the module is equal to the current of reference input that calculates the gain block.

- PWM controller connected to the MOSFET. Its function is to generate a pulse train (PWM signal) to trigger the MOSFET based on the input current driver output. The MOSFET is a semiconductor device that acts as a switch that opens or closes the flow of current. When it is closed, the string current enters through String IN and exits through String OUT through the main electronic board inductor and itself. When it is open (this is the moment when the object of the invention "steals" energy from the string) the current from the string flows through diode D and charges capacitor C. The longer the MOSFET is open, the more energy is stolen from the string. Normally almost the entire time the MOSFET remains closed since a tiny portion of energy is stolen from the string. For this reason, the object of the invention acts almost like a short circuit for electrical purposes.

In figure 3, a detail of the electronics presents in the rest of the modules (1... n) is shown. As can be seen, it has in common with the base booster module, the input current controller. These modules have as their input control signal the reference current that is calculated in the base boost module. Should an increase of the current input range of the object of the invention, riser modules may be connected being each riser module is a PCB board that is clicked on top of the main electronic board or main electronic board. Considering that the maximum input current that each riser module allows is 30 amps, in case of having an input current of 90 amps we would need 3 modules:

$$Number\ of\ modules\ (3) = \frac{Maximum\ string\ current\ (90)}{maximum\ input\ range\ of\ a\ module\ (30A)}$$

Therefore, for 3 modules having a string current at less than 90A, for example 30A, the current would be equally distributed, that is, 10.

In a second aspect of the invention, a method for power supplying and battery charging for feeding the solar a tracker through a connection to the string in solar fields using the arrangement of the first aspect of the invention is provided, said method encompasses determining a Reference voltage Vout (Vout Reference Value) as a fixed parameter that determines the output voltage of the converter. From this value an input voltage reference value (Vin Ref) is obtained that is compared with the real input voltage and through a first control loop a main electronic board inductor current reference value is obtained (this value is scaled in function of the number of stages that will work in parallel "N"). The main electronic board inductor current reference value in turn through another control loop determines a PWM value of the MOFSET of each of the stages. The method of the invention may be summarized as follows:

- Setting a reference voltage value (Vout Reference Value) a fixed parameter determining the output voltage of the step-up converter,

- Comparing a real output voltage value with output reference voltage value (Vout Ref) by means of a third control loop obtaining an input reference voltage value (Vin Ref).

- Comparing a real input voltage value with input reference voltage value (Vin Ref) by means of a first control loop obtaining a main electronic board inductor current reference value.

- Comparing a real inductor current value with inductor current reference value by means of a second control loop obtaining an output control for the PWM Controller.

- Obtaining PWM of the MOSFET of each stage by means of a PWM controller.

In alternative embodiments of the method of the invention the different stages can work in "interleaving" (out of phase with each other, intertwined) so that the ripple of the current in the input capacitor is appreciably reduced. This increases the life of the capacitor and the quality of the voltage that the rest of the installation sees.

Besides, in yet an alternative embodiment of the method of the invention, it is provided escalating the main electronic board inductor current reference value in function of the number of stages working in parallel "N".

**Claims**

1. Power supply and battery charging arrangement for feeding a solar tracker through connection to the string in solar fields, **characterised by** comprising:

   • a main electronic board capable of operating autonomously as a charger up to a maximum input current, said main electronic board being connected to:

   i. a load of the solar tracker to feed the solar tracker,
   ii. a battery to feed the battery and
   iii. a plurality of auxiliary electronic boards connected to the main electronic board, to expand the range of current input and comprising:

   i. an isolated converter, and
   ii. a step-up converter comprising in turn:

   • a main electronic board PV+ input,
   • a main electronic board PV- input connected to a first ground connector of the main electronic board,
   • a Vin measurement circuit connected to the main electronic board PV+ input,
   ∘ and the main electronic board PV- input
   • a first main electronic board controller connected to the Vin measurement circuit receiving the measured Vin,
   • a GAIN connected to the first controller associated to a main electronic board inductor current reference value,
   • a second main electronic board controller receiving the reference value from the GAIN and connected to the main electronic board inductor current measurement circuit configured to receive current measurements and to produce a main electronic board output control,
• a main electronic board switch driver PWM controller configured to receive the output control from the main electronic board second controller,
• a main electronic board low side switch connected to the main electronic board switch driver PWM controller and to a main electronic board second ground connector and a main electronic board Vout -,
• a main electronic board high side switch connected to the main electronic board switch driver PWM controller connected to a main electronic board Vout+,
• a main electronic board Vout measurement circuit arranged between the high side switch and the main electronic board Vout- to measure Vout,
• a main electronic board third controller connected to the main electronic board Vout measurement circuit and configured to generate a reference Vin value from a Vout reference value and sending said Vin value to the main electronic board first controller, and
• a plurality of auxiliary electronic boards connected to the main electronic board, which are connected to the main electronic board to expand the range of current input based on a current reference value generated by the main electronic board.

2. The arrangement of claim 1 wherein each auxiliary electronic board comprises:

• an auxiliary electronic board PV+ input,
• an auxiliary electronic board PV- input connected to a first ground connector of the auxiliary electronic board,
• an auxiliary electronic board inductor current measurement unit connected to the auxiliary electronic board PV+ input,
• an auxiliary electronic board controller connected to the auxiliary electronic board inductor current measurement unit to receive measured current and generate an auxiliary electronic board output control,
• an auxiliary electronic board switch drive PWM controller configure to receive the auxiliary electronic board output control from the auxiliary electronic board controller, connected to:

i. an auxiliary electronic board low side switch connected to a second auxiliary electronic board ground connector and auxiliary electronic board Vout -, and
ii. an auxiliary electronic board high side switch connected to an auxiliary electronic board Vout+, and

• a capacitor connected between the connections of:

∘ the auxiliary electronic board low side switch connected to the second auxiliary electronic board ground connector and auxiliary electronic board Vout -, and
∘ the auxiliary electronic board high side switch connected to an auxiliary electronic board Vout+.

3. The arrangement of either claim 1 or 2 wherein the auxiliary electronic board high side switch is a synchronous rectification action switch or a diode.

4. A method for power supplying and battery charging for feeding a solar tracker through connection to the string in solar fields using the arrangement of any one of the preceding claims, the method **characterised by** comprising:

• setting a reference voltage value (Vout Reference Value) a fixed parameter determining the output voltage of the step-up converter,
• comparing a real output voltage value with output reference voltage value (Vout Ref) by means of a third control loop obtaining an input reference voltage value (Vin Ref),
• comparing a real input voltage value with input reference voltage value (Vin Ref) by means of a first control loop obtaining a main electronic board inductor current reference value,
• comparing a real inductor current value with inductor current reference value by means of a second control loop obtaining an output control for the PWM Controller, and
• obtaining PWM of the MOSFET of each stage by means of a PWM controller.

5. The method of claim 4 further comprising escalating the main electronic board inductor current reference value in function of the number of stages working in parallel "N".

6. The method of claim 4 or 5 wherein the stages work out of phase with each other, intertwined.

FIGURE 1

FIGURE 2

FIGURE 3

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 10 651 739 B1 (LI CHEN [US] ET AL) 12 May 2020 (2020-05-12) * columns 5-7; figures 2-3c * ----- | 1-6 | INV. H02M3/158 |
| Y | US 2016/261205 A1 (KOLAR JOHANN [CH] ET AL) 8 September 2016 (2016-09-08) * paragraphs [0152] – [0156], [0233]; figures 13,14 * ----- | 1-6 | |
| A | US 2015/364982 A1 (CHAE SU YONG [KR] ET AL) 17 December 2015 (2015-12-17) * abstract; figure 4 * ----- | 1-6 | |

TECHNICAL FIELDS
SEARCHED (IPC)

H02M
H02J

The present search report has been drawn up for all claims

| Place of search | Date of completion of the search | Examiner |
|---|---|---|
| Munich | 4 April 2022 | Grosse, Philippe |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## EP 4 181 377 A1

### ANNEX TO THE EUROPEAN SEARCH REPORT
### ON EUROPEAN PATENT APPLICATION NO.

EP 21 38 3027

This annex lists the patent family members relating to the patent documents cited in the above-mentioned European search report.
The members are as contained in the European Patent Office EDP file on
The European Patent Office is in no way liable for these particulars which are merely given for the purpose of information.

04-04-2022

| Patent document cited in search report | | Publication date | Patent family member(s) | | Publication date |
|---|---|---|---|---|---|
| US 10651739 | B1 | 12-05-2020 | AU | 2020227736 A1 | 02-09-2021 |
| | | | CN | 113519113 A | 19-10-2021 |
| | | | EP | 3931954 A1 | 05-01-2022 |
| | | | US | 10651739 B1 | 12-05-2020 |
| | | | WO | 2020176540 A1 | 03-09-2020 |
| US 2016261205 | A1 | 08-09-2016 | CN | 105939106 A | 14-09-2016 |
| | | | DE | 102016103828 A1 | 08-09-2016 |
| | | | KR | 20160108197 A | 19-09-2016 |
| | | | US | 2016261205 A1 | 08-09-2016 |
| US 2015364982 | A1 | 17-12-2015 | KR | 20150142743 A | 23-12-2015 |
| | | | US | 2015364982 A1 | 17-12-2015 |

EPO FORM P0459

For more details about this annex : see Official Journal of the European Patent Office, No. 12/82